# EUROPÄISCHE PATENTANMELDUNG

(11) **EP 1 319 933 A1**
(43) Veröffentlichungstag der Anmeldung: **18.06.2003**
(21) Anmeldenummer: 02025253.2
(22) Anmeldetag: 12.11.2002
(51) Int. Cl.: G01J 1/42, G01J 1/58, G01J 5/58

(54) **Sensor zur kontaktlosen Bestimmung eines Umgebungsparameters mit räumlicher und zeitlicher Auflösung und Verwendung desselben zur Bestimmung der Modenstruktur von Laserstrahlen**

(30) Priorität: 17.12.2001 CH 23152001
(71) Anmelder: SolSens GmbH, 3012 Bern (CH)
(72) Erfinder: Blatter, Andreas, 3232 Ins (CH); Karametaxas, Georgios, 3012 Bern (CH); Romano, Valerio, 4500 Solothum (CH)

(57) **Zusammenfassung**

Der Sensor enthält eine keramische oder organisch-keramische Sensorschicht 2 mit lumineszierenden Zentren mit einer von Umgebungsparametern abhängigen Lumineszenzausbeute. Die mit einer Beleuchtungseinheit 1 angeregte Lumineszenz wird zur Messung des Umgebungsparameters mit einer Aufnahmeeinheit 4 registriert. Dieser Sensor eignet sich für die kontaktlose Messung eines Umgebungsparameters, insbesondere der Temperatur, dem Druck oder dem Sauerstoffgehalt. Er kann sowohl für die Messung eines zeitlichen Verlaufs als auch für die Ermittlung einer Verteilung zu einem bestimmten Zeitpunkt eingesetzt werden. Der Sensor zeichnet sich durch kurze Beobachtungszeiten im Nanosekundenbereich sowie mikroskopische räumliche Auflösung im Mikrometerbereich aus. Insbesondere eignet sich dieser Sensor zur Bestimmung der Modenstruktur von infraroten Laserstrahlen.

## Beschreibung

### Technisches Gebiet

Die vorliegende Erfindung bezieht sich auf einen Sensor und eine Verwendung desselben gemäss den unabhängigen Patentansprüchen 1 und 9.
Der Sensor eignet sich für die kontaktlose Messung eines Umgebungsparameters, insbesondere der Temperatur, dem Druck oder dem Sauerstoffgehalt. Er kann sowohl für die Messung eines zeitlichen Verlaufs als auch für die Ermittlung einer Verteilung zu einem bestimmten Zeitpunkt eingesetzt werden. Der erfindungsgemässe Sensor zeichnet sich durch kurze Beobachtungszeiten im Nanosekundenbereich sowie mikroskopische räumliche Auflösung im Mikrometerbereich aus. Insbesondere eignet sich dieser Sensor zur Bestimmung der Modenstruktur von infraroten Laserstrahlen.

### Stand der Technik

Verschiedene Ansätze wurden entwickelt, um Umgebungsparameter wie die Temperatur, der Druck oder die Sauerstoffkonzentration mit hoher zeitlicher und räumlicher Auflösung zu messen.
Das Patent US4596461 beispielsweise schlägt vor, zur Messung des Strahlprofils eines Lasers Thermoelemente an einen dünnen Spiegel anzubringen. Das Einbringen von miniaturisierten Thermoelementen in die Probe stört jedoch das Temperaturfeld. Zudem ist bei dieser Methode keine hohe räumliche Auflösung möglich und die zeitliche Auflösung liegt im Bereich von Millisekunden. Um diese Grenzen zu umgehen, wurden kontaktlose Verfahren untersucht. Die direkte thermische Strahlung ist aber relativ schwach, was lange Beobachtungszeiten bedingt. Die räumliche Auflösung ist durch die Beugungsbegrenzung bei der thermischen Wellenlänge bestimmt.

Eine hohe räumliche Auflösung wird mit Verfahren erreicht, welche die Temperatur über optisch induzierte Phosphoreszenz, welche stark temperaturabhängig ist, bestimmen. In diesem Fall ist die Zeitauflösung immer noch im Bereich von 200 Mikrosekunden, limitiert durch die Abklingzeit der Fluoreszenz der verwendeten Chemikalien. Das Patent IN156954 zum Beispiel stellt ein Fibersensor vor, bei dem ein Pulvergemisch zweier Phosphore auf das Fiberende geklebt und die Temperatur aufgrund der differentiellen Lumineszenz der beiden Phosphore ermittelt wird.
Die Schriften EP0675348 und S. Bertrand et al. *Optics Communications* **117** 90-94 (1995) beschreiben ein kryogenischen Temperatursensor (20K-80K) auf der Basis von fluoreszierenden Kristallen und von Sol-Gel Materialien, in die fluoreszierendes SrF₂:Yb²⁺ Kristallpulver eindispergiert wurde. Bei diesen Materialien liegen die Abklingzeiten der Lumineszenz im Bereich 10-120 µs. Zudem ermöglicht dieser Temperatursensor keine Messung mit räumlicher Auflösung, da keine ausgedehnte Schicht verwendet wird.
Ein bedeutend schnelleres Verfahren wäre die Temperaturmessung mittels spontaner Anti-Stokes Ramanstreuung, aber dieser Prozess ist für praktische Anwendungen zu schwach. Ein verbessertes Lumineszenzverfahren, das sowohl hohe räumliche wie auch zeitliche Auflösung ermöglicht, wurde von V.Romano et al. in *Appl. Phys. B* **49** 527-533 (1989) beschrieben. Die Autoren haben Rhodamin, ein bekannter Laserfarbstoff mit einem direkten S1-S0 Fluoreszenzübergang und hoher Quantenausbeute, in einen Polymerschicht eingebettet. Wird diese Schicht mit grünem oder UV Licht bestrahlt, so fluoresziert sie rot. Die Stärke der Lumineszenz hängt stark von der lokalen Umgebungstemperatur der Farbstoffmoleküle ab, womit über eine Messung der Fluoreszenz die Temperatur bestimmt werden kann. Die Zeitauflösung ist gegeben durch die Beleuchtungsdauer (variabel) bzw. durch die Lebensdauer der Fluoreszenz, welche bei 4 Nanosekunden liegt. Für die Realisierung des Messverfahrens haben die Autoren eine mit Rhodamin dotierte Polyurethanschicht aus der Lösung auf ein Trägermaterial aufgetragen. Probleme liegen bei dieser Realisierung in der Reproduzierbarkeit der Schichten. Je nach Zusammensetzung und thermischer Vorgeschichte durchläuft das Polymer verschiedene Phasenübergänge, was zu temperatur- und zeitabhängigen Hysteresen beim Durchlaufen des Erwärmungs-/Abkühlzyklus führt. Eine weitere Einschränkung bei Kunststoffschichten ergibt sich daraus, dass organische Farbstoffe im angeregten Zustand photochemische Reaktionen mit der organischen Umgebung eingehen können, was eine schlechte Photostabilität zur Folge hat.
Ein Aspekt unserer Erfindung besteht darin, dieses Fluoreszenzverfahren zur Messung der Temperatur und anderer Umgebungsparameter zu verbessern und weiterzuentwickeln, indem der fluoreszierende Farbstoff in eine stabile und inerte Oxidschicht eingebettet wird und solche aktive Sensorschichten zur Analyse von IR-Laserstrahlen (d.h. zur Bestimmung der Position sowie der Modenstruktur/Intensitätsprofil des Laserstrahls) einzusetzen. Zudem hat der erfindungsgemässe Sensor gegenüber dem von V.Romano (ca. 20°C bis 175°C) publizierten Stand der Technik den Vorteil deutlich, grössere Temperaturbereiche abdecken zu können.

Es ist daher Aufgabe der vorliegenden Erfindung einen Sensor für die Messung eines Umgebungsparameters mit hoher räumlicher (lateraler) und zeitlicher (temporaler) Auflösung zu schaffen, der die obenerwähnten bekannten Probleme behebt. Diese Aufgabe wird erfindungsgemäss durch den Sensor gemäss Patentanspruch 1 gelöst. Bevorzugte Ausführungsformen werden in den abhängigen Ansprüchen umschrieben.

Typische gewerbliche Anwendungen der Erfindung sind die Messung von Wärmeverteilungen und Hotspots auf Leiterplatten und die Messung von Strömen. Zudem können Laserstrahlprofile gemessen werden und Temperaturverteilungen auf bewegten mechanischen Teilen wie Turbinen und Rotoren bestimmt werden. Die Erfindung lässt sich jedoch ganz allgemein zur Bestimmung von lateralen und temporalen Verteilungen von Umgebungsparametern, wie der Temperatur, dem Druck und der Sauerstoffkonzentration einsetzen.

Der Sol-Gel Prozess ist ein erprobtes Verfahren zur Herstellung von Oxidschichten und keramisch oder organisch-keramischen Kompositschichten. Der Begriff keramisch wird hier im Gegensatz zu Metallen oder Polymeren verwendet und umschliesst auch kristalline und polykristalline Materialien. Bei diesem Prozess bildet sich in einer Lösung von Metallalkoxiden durch Hydrolyse- und Kondensationsreaktionen bei Raumtemperatur ein 3D-Netzwerk von Metalloxiden aus. Wird der Ausgangslösung für diesen Prozess ein Farbstoff wie Rhodamin zugefügt, so wird dieser vollständig im Netzwerk des entstehenden porösen Glases eingeschlossen [D.Avenir et al. in *J. Non-Cryst. Sol.* 395-406 **74** (1985)] . Eine Reihe von chemischen Sensoren wie auch der bereits erwähnte kryogenische Temperatursensor auf der Basis von fluoreszierenden Sol-Gel Fibern wurden bereits vorgeschlagen jedoch ohne deren Vorteile für die Messung von Temperaturvereilungen auszunutzen. Im abhängigen Patentanspruch 3 wird eine bevorzuge Ausführungsform des Sensors auf Grund der Sol-Gel Technologie beansprucht.

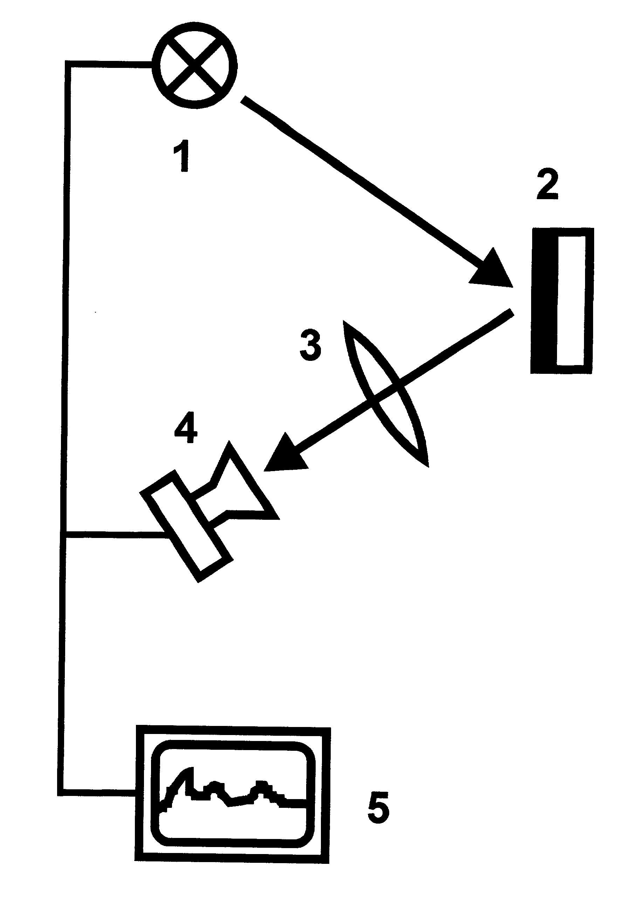

Das Lumineszenzverfahren zur Temperaturmessung stellt eine elegante Methode zur Lokalisierung und Ausmessung von infraroten Laserstrahlen dar. Die Abbildung eines Erbium Laserstrahls mit Rhodamin dotierten Polyurethanschichten wurde von V.Romano et al. in *Appl. Phys. B* **49** 527-533 (1989) demonstriert. Der Laserstrahl erwärmt die Sensorschicht gemäss seiner Intensitätsverteilung, so dass das Strahlprofil also über die Messung der durch die Laserstrahlung erzeugte Temperaturverteilung in der Schicht rekonstruiert werden kann.
Die Qualität des Strahlprofils ist von grosser Bedeutung für jegliche Anwendung von Laserstrahlen. Das Messen bzw. die Überwachung des Intensitätsprofils eines Laserstrahls im ultravioletten bis sichtbaren Spektralbereich ist relativ einfach und wird meist mit einer CCD-Kamera realisiert. Grössere Probleme bereitet das Messen von infraroten Laserstrahlen (> 1µm), da die in diesem Spektralbereich die üblichen elektronischen Kameras (CCD-Kameras) "blind" sind. IR-Laser sind aber besonders wichtig u.a. in der industriellen Materialbearbeitung (CO₂ Laser wegen seiner hohen Leistung bei guter Strahlqualität) und in der Lasermedizin (Absorptionsbänder von Wasser bei 2.9µm und 3.1µm).
Bei den heute gebräuchlichen Methoden zur quantitativen Messung von IR-Laserstrahlen wird der Laserstrahl abgetastet oder ein Teilstrahl auf einen Phosphorschirm (Wärmebildplatte), thermischen Detektor oder Quantendetektor umgelenkt. Sie weisen einige wesentliche Nachteile auf:
- Pyroelektrische Bildsensoren sind teuer, langsam und haben wegen ihrer Pixelstruktur eine relativ schlechte Auflösung. Eine etwas kostengünstigere Variante, ohne die anderen Nachteile zu beheben, verspricht das pixelartig strukturierte Aufbringen einer pyroelektrischen Schicht auf ein Trägermaterial [JP7286894].
- Bei bewegten Schlitzen, Spalten und Nadeln zur Auskopplung eines Teilstrahles auf einen Detektor sind Mehrfachmessungen nötig, um den ganzen Strahl abzurastern. Diese Methoden sind deshalb nur auf kontinuierliche oder repetitiv gepulste Laserstrahlung anwendbar. Es werden mechanisch bewegte Teile benötigt, was sowohl die Vorrichtung wie ihre Handhabung äusserst aufwendig macht.
Das Patent DE3841244 beschreibt einen möglichen Messaufbau für die Messung von IR-Laserstrahlen mit Hilfe eines Materials, das bei Infrarotbestrahlung seine optischen Eigenschaften im sichtbaren Bereich ändert. Als Beispiele für solche Materialien werden namentlich Phosphore, Thermolacke und Flüssigkristalle jedoch keine keramischen oder organisch-keramischen Materialien aufgeführt. Die in der Patentschrift DE3841244 aufgezählten Materialien weisen jedoch die bereits obenerwähnten Nachteile des Stands der Technik auf. Zudem sind diese Materialien für den industriellen Lasereinsatz nicht genügend widerstandsfähig und es ist mit diesen Materialien keine on-line Messung des Laserstrahls während des Einsatzes möglich.

Es ist daher weitere Aufgabe der vorliegenden Erfindung, ein Messverfahren zu schaffen, dass die obenerwähnten Nachteile des bekannten Stands der Technik überwindet. Diese Aufgabe wird durch die Verwendung des Sensors gemäss einem der Patentansprüche 1 bis 8 zur Bestimmung von Position und Profil, das heisst Modenstruktur, von Laserstrahlen, insbesondere Infrarot-Laserstrahlen gemäss Patentanspruch 9 gelöst. Eine bevorzuge Ausführungsform ist in einem abhängigen Anspruch umschrieben.

Dieses Messverfahren mit einem erfindungsgemässen Sensor, d.h. mit keramischen oder organisch-keramischen Schichten bzw. mit thermosensitiven Sol-Gel Lumineszenzschichten, bringt eine Reihe von Verbesserungen. Es ist kostengünstig. Gepulste Messungen mit Mikrometerauflösung (z.B. für die Ausmessung fokussierter Laserstrahlen) sind möglich. Die Sol-Gel Sensorschicht ist im Vergleich zu fluoreszierenden Polyurethanschichten mechanisch resistenter, photostabiler und chemisch stabiler. Das Sensorelement und der Temperatursensor zeichnet sich dadurch aus, dass sie in einen Laser integriert werden können, indem die aktive fluoreszierende Sensorschicht direkt auf ein optisches Element im Strahlengang des Lasers aufgebracht werden kann, insbesondere auf einen Laserspiegel oder ein transmissives Element. Diese Konfiguration ermöglicht die in-situ Laserstrahlanalyse am tatsächlich verwendeten Laserstrahl, ohne diesen dabei zu verändern. Die Sensorschicht und allfällige weitere Schichten sind so konzipiert, dass sie die ursprüngliche Funktion und Charakteristik des optischen Elements nicht störbar beeinflussen (Reflektivität über 95% und Planität besser als λ/10).

Dies ermöglicht die Messung und Analyse des Hauptlaserstrahls während des Betriebs (beispielsweise während des Laserschneidens), ohne diesen durch die Messung zu verändern oder ohne dass zu dessen Messung ein Teilstrahl ausgekoppelt werden müsste. Zudem ermöglicht dies eine Ferndiagnostik des Lasers durch Übertragung des Messsignals beispielsweise über eine Telefonleitung. Weiter ermöglicht dies die Steuerung / Justierung des Lasers, insbesondere auch on-line während des Betriebs, indem das Messsignal als Kontrollsignal in die Lasersteuerung rückgekoppelt wird. Insbesondere lässt sich dadurch eine adaptive Optik steuern.

### Wege zur Ausführung der Erfindung

Das Messprinzip beruht auf der Abhängigkeit der Lumineszenzausbeute von organischen Chromophoren (z.B. Rhodamin), von Übergangsmetallen (wie z.B. in Rubin) oder von seltenen Erden von gewissen Umgebungsparametern. Die Lumineszenzausbeute ist insbesondere abhängig von der Temperatur. Die Lumineszenzausbeute lässt sich jedoch auch durch andere Parameter verändern. Zum Beispiel hat der Sauerstoffgehalt und der Partialdruck von Sauerstoff einen Einfluss auf die Fluoreszenzausbeute. Die Farbmoleküle bzw. die Ionen werden mit dem Sol-Gel Verfahren in eine inerte Oxidschicht eingebettet. Bei Bestrahlung der Schicht mit geeignetem Licht wird die Lumineszenz bzw. Fluoreszenz angeregt. Da die Lumineszenz von der Temperatur abhängt, wird jeder Ort der Schicht unterschiedlich starkes Lumineszenz- bzw. Fluoreszenzlicht aussenden: wärmere Stellen erscheinen dunkler als kältere Stellen. Durch die zeit- und ortsaufgelöste Messung bzw. Abbildung der Lumineszenz z.B. mit einer CCD Kamera oder Photodiode und mit Kenntnis der Temperaturabhängigkeit der Lumineszenz kann die 2D-Temperaturverteilung und der Temperaturverlauf in der Schicht ermittelt werden.
Absolute Temperaturen lassen sich dann aus dem Kontrastbild ableiten, wenn die Anregung mit einer kalibrierten Beleuchtungsquelle erfolgt. Eine elegantere Alternative besteht darin, das Messbild bezüglich einem Referenzbild, welches vor der eigentlichen Messung bei einer bekannten Temperatur aufgenommen wurde, zu normieren. Diese Methode hat den Vorteil, dass sowohl morphologische Strukturen in der Sensorschicht als auch Alterung/Streuungen der Beleuchtungsquelle eliminiert werden.
Im Fall der Laserstrahlanalyse wird in der Schicht eine Wärmeverteilung dadurch erzeugt, dass ein Bruchteil der auf die Schicht bzw. das Schichtsystem auftreffende Laserstrahl absorbiert und in Wärme umgewandelt wird. Ist das Schicht-Substratsystem so konzipiert, dass die Wärmediffusion vorwiegend senkrecht zur Oberfläche statt lateral erfolgt, entspricht die durch den Laserstrahl erzeugte Wärmeverteilung und das gemessene Lumineszenzbild weitgehend der Intensitätsverteilung des Laserstrahls.
Bei der Vermessung eines Laserstrahlprofils muss nicht zwingend eine Beleuchtungseinheit im Messaufbau vorhanden sein. Die Lumineszenz kann in diesem Fall direkt durch den Laserstrahl angeregt werden.

Um den Druck oder die Sauerstoffkonzentration zu messen wird das PSP-Verfahren verwendet. Das PSP-Verfahren beruht auf der Tatsache, dass die Sauerstoffkonzentration proportional zum Luftdruck ist und gleichzeitig die Lumineszenzintensität mancher angeregter Farbstoffe umgekehrt proportional zur 0₂-Konzentration sein kann. Dieses Phänomen entsteht durch den Zusammenstoss der Sauerstoff- mit den angeregten Farbstoffmolekülen (quenching) und wird durch die Stern-Volmer-Gleichung beschrieben. Die Höhe des Quenchings ist proportional zum Partialdruck des Sauerstoffes oder anders gesagt, die Lichtemission des aktiven Farbstoffes ist umgekehrt proportional zum 0₂-Partialdruck und somit zum eigentlichen Druck. Ein solches optisches Verhalten gegenüber Sauerstoff zeigt z.B. der Ruthenium-Komplex, Ru(II)-tris(4,7-diphenyl-1,10-phenanthroline) => [Ru(Ph₂phen)₃²⁺], welcher einen hohen emissiven MLCT-Übergang, eine lange Lebensdauer, einen langen Stokes-Shift und eine starke Absorption im blau-grünen Spektralbereich (λ_{(abs)}=450 nm, λ₍ₑₘ₎=610 nm) aufweist.
In einer Sol-Gel-Schicht auf Siliziumoxid- bzw. Silizium/Aluminiumoxid-Basis wird der aktive Farbstoff in einem Gewichtverhältnis von 0.1 bis 1% dotiert. Durch die Auswahl geeigneter Anfangschemikalien und Herstellungsbedingungen weist die Sol-Gel Schicht eine definierte Porosität und eine erhöhte mechanische Stabilität auf. Die relativ hohe Porosität der Schicht ist von grosser Bedeutung, da damit eine hohe 02-Permeabilität garantiert wird, und somit eine höhere Empfindlichkeit bei der Druckmessung erzielt wird.
Um die Druckverteilung an Oberflächen zu erfassen, wird die drucksensitive Sol-Gel Schicht auf die besagte Oberfläche durch das Dip-, Spin- oder Spray-Verfahren homogen aufgebracht. Die Sol-Gel Schicht wird mit kurzwelligem Licht (UV-, Flash-, LED-Lampe, Laser) angeregt. Durch den Photolumineszenzprozess emittiert sie dann bei längerer Wellenlänge. Ein Photodetektor (CCD-Kamera, PMT, Photodiode) erfasst die Lichtemission und ein geeignetes PC-Auswertungssystem ist für die Datenakquisition zuständig.
Die PSP-Verfahren sind in der Regel leider auch temperaturempfindlich. Das heisst, dass nach jeder Druckmessung die Temperatur korrigiert, oder dass diese bei konstanter Temperaturumgebung vorgenommen werden muss.

Im nachfolgenden wird die Erfindung anhand der einzigen Abbildung erläutert. Die Abbildung zeigt schematisch den Aufbau des Sensors. Die Bezugszeichen in der Abbildung bezeichnen:
- Ziffer 1: Beleuchtungseinheit, z.B. eine Blitzlampe oder ein LED-Cluster
- Ziffer 2: Sensorelement bestehend aus einer Sensorschicht auf einem Trägermaterial
- Ziffer 3: Fokussieroptik, Farbfilter etc.
- Ziffer 4: Aufnahmeeinheit z.B. eine CCD-Kamera
- Ziffer 5: Auswerte- und Ausgabeeinheit, z.B. Personalcomputer

Der Sensor besteht aus folgenden Komponenten
- lumineszierende Sol-Gel Schicht als aktives Sensorelement. Die lumineszierende Substanz zeichnet sich durch eine temperaturabhängige Lumineszenzausbeute aus. Beispiele: Rhodamin, seltene Erden wie Eu oder Ce, Ruthenium, Al-Rubin. Die Schichten haben typische Dicken im Bereich von 50 nm bis 50 µm.
- allfällig einem Trägermaterial für die aktive Sensorschicht. Für die integrierte IR-Laserstrahlanalyse sind das im Fall eines Spiegelsensors u.a. Cu, Si, Mo, Al (bzw. Material mit geringer thermischer Dilatation und/oder hoher thermischer Leitfähigkeit) oder im Fall von transmissiven Sensorelementen u.a. ZnSe, Ge, TeSe-Halogenid Gläser (bzw. Material mit hoher Transmission bei der Laserwellenlänge).
- allfällig einer Beleuchtungseinheit (LED, Blitzlampe) zur Anregung der Lumineszenz Aufnahmeeinheit (CCD-Kamera, Photodiode) zur Messung der zur Temperatur proportionalen Lumineszenz als Funktion der Zeit bzw. des Ortes. Optional kann das Licht zur Beleuchtung über eine optische Fiber der Sensorschicht zugeführt werden und das Lumineszenzlicht über dieselbe oder eine andere Fiber zur Detektionseineheit geführt werden.
- Auswerte- und Ausgabeeinheit (PC mit Software) zur Normierung und Darstellung der Messgrösse in Einheiten der Temperatur oder andern, mit der Temperatur korrelierten Grössen wie insbesondere dem Intensitätsprofil eines Laserstrahls.
   Zusätzlich zur lumineszierenden Sensorschicht können noch weitere Schichten mit spezifischen Funktionalitäten in den Sensor eingebaut werden:

- Eine oder mehrere Diffusionssperrschichten zwischen Trägermaterial und der Sensorschicht. Ihre Funktion ist zweierlei. Je nach Trägermaterial ist sie nötig, um die Diffusion von Substanzen / Ionen, welche die Lumineszenz der aktiven Schicht quenchen, zu unterbinden. Andererseits kann durch die Wahl der thermischen Leitfähigkeit und der Dicke einer thermischen Diffusionssperrschicht die Sensibilität und der dynamische Bereich des Sensors eingestellt werden. Diese Schichten können metallischer, keramischer oder kunststoffartiger Natur sein.
- Eine zusätzliche dünne, im Spektralbereich der Lumineszenzanregung hochreflektierende Metallschicht zwischen Trägermaterial bzw. Diffusionssperrschicht und der lumineszierenden Sensorschicht kann die Lumineszenzanregung und somit die Empfindlichkeit des Sensors dadurch erhöhen, dass das Anregungslicht nach dem Durchgang durch die Sensorschicht zurückreflektiert wird und die Schicht ein zweites Mal durchquert.
- Zur Minimierung des Laserstrahlverlusts und/oder zur Limitierung der Erwärmung des Sensorsystems kann auf das Sensorsystem nach gängiger Technik ein auf die Laserwellenlänge abgestimmtes HR-Schichtsystem (Spiegelsensor) oder AR-Schichtsystem (Transmissionssensor) aufgebracht werden.

In einem Ausführungsbeispiel wurde ein Sensorspiegel mit folgender Konfiguration aufgebaut:
- Kupfersubstrat, Durchmesser 50mm, Dicke 10 mm
- Diffusionssperrschicht aus PMMA
- Goldmetallisierung
- 400 nm dünne, mit Rhodamin dotierte SiO₂-Schicht, hergestellt mittels der Sol-Gel Technik
- Kommerzielles HR-Schichtsystem für CO₂ Laserstrahlung Dieser Sensorspiegel zeigte folgende Charakteristik:

- Planität besser als λ/40
- Reflexionsgrad für einen 3kW CO₂ Laserstrahl 99.8%
- Laterale Auflösung 0.1 mm
- Temperaturerhöhung der Sensorschicht im Bereich des Laserstrahls um 2°C

In einer Anwendungskonfiguration wurde dieser Sensorspiegel als Umlenkspiegel in einen Hochleistungslaser eingebaut. In die Halterung des Umlenkspiegels wurden grüne LEDs zur Anregung der Lumineszenz derart eingebaut, um eine homogene Beleuchtung des Spiegels zu erreichen. Eine CCD-Kamera zur Aufnahme des Lumineszenzbildes des Spiegels wurde ebenfalls in die Halterung eingebaut. LEDs und CCD Kamera werden durch einen PC gesteuert.

Besondere Merkmale und Anwendungen des Sensorelementes sind:
- Stabile, inerte Oxidmatrix u. höhere Konzentration aktiver Moleküle durch Sol-Gel Verfahren
- Die aktive Sensorschicht kann auf fast beliebige Trägermaterialien und insbesondere auf passive oder aktive optische Elemente im Strahlengang (Spiegel, Linsen, Abschwächer, Strahlteiler...) aufgebracht werden., ev. mit Zwischenschichten und Deckschichten (Diffusionssperrschichten, Absorberschicht, Reflection Multilayer Coating) zur Einstellung der Sensorcharakteristik und zur Kompensation des Einflusses der aktiven Sensorschicht auf das optische Verhalten des optischen Laserelementes.
- Damit lässt sich, im krassen Gegensatz zu konventionellen Messmethoden, die Position und Modenstruktur des Laserstrahls on-line bestimmen, ohne diesen durch den Messeingriff zu stören (d.h. man gewinnt ein Bild des tatsächlichen 'Arbeitsstrahls'). Derselbe Sensor kann aber auch extern in einem eigenständigen, vom Laser unabhängigen Messaufbau eingesetzt werden.
- Das Sol-Gel Verfahren ist eine besonders attraktive Technik zum Aufbringen der aktiven Sensorschicht.
- Der Sensor besticht durch seine sehr hohe zeitliche Auflösung. Beispielsweise für Rhodamin, bei dem die Fluoreszenzlebensdauer ca. 4ns beträgt, liegt die Anstiegszeit bei direktem Heizen durch IR-Strahlung im Bereich von wenigen Nanosekunden. Bei typischen Sensorkonfigurationen liegt sie im Bereich von < 1 Mikrosekunde. Die Beobachtungszeit für Standbilder beträgt nur wenige Nanosekunden, gegeben durch die Blitzlänge der Beleuchtungsquelle.
- Die räumliche Auflösung ist, da es sich um eine kontinuierliche Sensorschicht handelt, nicht durch eine Pixelgrösse beschränkt, sondern durch die thermophysikalischen Grössen des Sensor-Schichtsystems. Eine Auflösung von wenigen Mikrometern wurde demonstriert, was die Messung der Energieverteilung im Fokus ermöglicht.

## Patentansprüche

1. Sensor zur kontaktlosen Bestimmung eines Umgebungsparameters, insbesondere Temperatur, Druck oder Sauerstoffkonzentration, mit räumlicher und zeitlicher Auflösung enthaltend
a. ein Sensorelement (2) bestehend aus mindestens einer Sensorschicht, die lumineszierende Zentren mit einer vom Umgebungsparameter abhängigen Lumineszenzausbeute enthält und mit
b. einer Beleuchtungslicht erzeugenden Beleuchtungseinheit (1) zur Anregung von Lumineszenzlicht der lumineszierende Zentren und/oder
c. einer Aufnahmeeinheit (4), insbesondere einer elektronischen Kamera, zur räumlichen und zeitlichen Registrierung des Lumineszenzlichts,
**dadurch gekennzeichnet, dass** die Sensorschicht aus keramischem oder organisch-keramischem Material besteht.

2. Sensor gemäss Patentanspruch 1, **dadurch gekennzeichnet, dass** der Umgebungsparameter eine Temperatur ist, das heisst, dass die Sensorschicht lumineszierende Zentren mit einer temperaturabhängigen Lumineszenzausbeute enthält.

3. Sensor gemäss einem der Patentansprüche 1 oder 2, **dadurch gekennzeichnet, dass** die Sensorschicht eine Sol-Gel Schicht ist.

4. Sensor gemäss einem der Patentansprüche 1 bis 3, **dadurch gekennzeichnet, dass** die lumineszierenden Zentren Rhodamin sind.

5. Sensor gemäss einem der Patentansprüche 1 bis 4, **dadurch gekennzeichnet, dass** das Sensorelement (2) zusätzlich zu der Sensorschicht weitere Schichten, insbesondere Diffusionssperrschichten, Metallschichten, antireflektierende oder hochreflektierende Schichten, enthält.

6. Sensor gemäss einem der Patentansprüche 1 bis 5, **dadurch gekennzeichnet, dass** die Beleuchtungseinheit (1) aus Leuchtdioden LEDs und/oder Blitzlampen besteht.

7. Sensor gemäss einem der Patentansprüche 1 bis 6 **dadurch gekennzeichnet, dass** zusätzlich ein holographisches Streuelement zum Erzeugen von homogenem Beleuchtungslicht, enthalten ist.

8. Sensor gemäss einem der Patentansprüche 1 bis 7 **dadurch gekennzeichnet, dass** Lichtleiter enthalten sind, wobei das Beleuchtungslicht und/oder das Lumineszenzlicht durch diese Lichtleiter zu- beziehungsweise weggeführt wird.

9. Verwendung eines Sensors gemäss einem der Patentansprüche 1 bis 8 zur Bestimmung von Position und Profil, das heisst Modenstruktur, von Laserstrahlen, insbesondere Infrarot-Laserstrahlen, **dadurch gekennzeichnet, dass** das Sensorelement (2) mit dem Laserstrahl bestrahlt wird, der Laserstrahl eine Temperaturverteilung im Sensorelement (2) induziert und die Position und das Profil des Laserstrahls durch Registrierung des Lumineszenzlichts mit der Aufnahmeeinheit (4) indirekt bestimmt wird.

10. Verwendung gemäss Patentanspruch 9, **dadurch gekennzeichnet, dass** das Sensorelement (2) als integriertes Element, das heisst als reflektives Element, insbesondere Umlenk-, Falt- oder adaptiver Spiegel, oder als transmissives Element, insbesondere Abschwächer, Strahlteiler oder Lichtleiter, im Gang des Laserstrahls eingesetzt wird.
